# EUROPÄISCHE PATENTSCHRIFT

(11) **EP 1 580 526 B1**
(45) Veröffentlichungstag und Bekanntmachung des Hinweises auf die Patenterteilung: **23.01.2008**
(21) Anmeldenummer: 05005830.4
(22) Anmeldetag: 17.03.2005
(51) Int. Cl.: G01C 15/00, G01B 11/27

(54) **Vorrichtung zum Abbilden einer linienförmigen optischen Markierung**
Device for projecting an optical line marker
Dispositif de projection d'un repérage lumineux linéaire

(30) Priorität: 26.03.2004 DE 102004015469; 10.05.2004 DE 202004007476 U
(43) Veröffentlichungstag der Anmeldung: 28.09.2005
(73) Patentinhaber: Stabila Messgeräte Gustav Ullrich GmbH, 76855 Annweiler (DE)
(72) Erfinder: Busam, Daniel, 76829 Godramstein (DE); Kallabis, Gabriel, 76848 Spirkelbach (DE)
(74) Vertreter: Stoffregen, Hans-Herbert

(56) Entgegenhaltungen:
- DE-A1- 10 217 108
- US-A- 3 984 154
- US-B1- 6 539 638
- PATENT ABSTRACTS OF JAPAN Bd. 2003, Nr. 12, 5. Dezember 2003 (2003-12-05) & JP 2004 094123 A (HITACHI KOKI CO LTD), 25. März 2004 (2004-03-25)

## Beschreibung

Die Erfindung bezieht sich auf eine Vorrichtung zum Abbilden einer linienförmigen optischen Markierung in einen Raum umfassend ein Gehäuse mit das Licht entlang einer optischen Achse emittierender Lichtquelle sowie eine der Lichtquelle nach geschaltete von der optischen Achse durchsetzte das Licht sowohl reflektierende als auch durchlassende Linse, wobei deren Längsachse quer zur optischen Achse der Lichtquelle verläuft.

Aus der DE-A-102 17 108 ist eine Laserstrahlvorrichtung bekannt, die insbesondere in der Bauindustrie zum Einsatz gelangt und mit der ohne Unterbrechung eine über einen weiten Winkel verlaufende Linie erzeugbar ist. Hierzu fällt ein eine Kollimatorlinse durchsetzendes Laserstrahlenbündel auf eine Stablinse, die lichtquellenseitig eine semitransparente Fläche aufweist, um einen linienförmigen Lichtstrahl in Richtung der Lichtquelle zu reflektieren. Das nicht reflektierte Licht durchsetzt sodann eine vollständig transparente lichtquellenabgewandte Fläche der Stablinse und wird gebrochen, um in einer zur ersten Richtung entgegengesetzten zweiten Richtung einen linienförmigen Lichtstrahl zu erzeugen.

Um eine Linie sichtbaren Lichts auf einer Fläche abzubilden, die unmittelbar vor einem die Lichtquelle aufnehmenden Gehäuse beginnt, sind nach der US-B-6,502,319 mehrere Zylinderlinsen bzw. Spiegel vorgesehen, mittels derer der von der Lichtquelle emittierte Lichtstrahl in erforderlichem Umfang aufgefächert wird.

Lichtstrahlennivelliergeräte nach dem DE-U-203 04 117 und dem DE-U-203 04 114 weisen vor einer Lichtquelle, über die ein linienförmiger Lichtstrahl erzeugt werden soll, Zeilenlinsen auf, die aus Abschnitten unterschiedlicher Brennweiten zusammengesetzt sind.

Um unterhalb einer optischen Markierungsvorrichtung auf ein Werkstück zwei sich unter einem rechten Winkel schneidende Linien zu erzeugen, werden nach der DE-C-199 53 114 zwei seitliche nebeneinander angeordnete Projektionseinrichtungen vorgeschlagen, die jeweils eine Lichtquelle und eine in deren Strahlengang angeordnete Optik umfassen.

Zur Erzeugung einer optischen Markierungslinie, die in etwa 360° abdeckt, wird nach der US-A-6,539,638 eine teilweise transparente Linse in Form eines Zylinders benutzt.

Aus der DE-C-36 04 500 ist ein Vorsatzteil für einen Lichtleiter bekannt, der auf dem Dentalgebiet zum Einsatz gelangt. Mittels des Lichtleiters erfolgt eine gleichmäßige Ausleuchtung eines rechteckigen Feldes. Hierzu wird eine Zylinderlinse verwendet, die eine rinnenförmige Ausnehmung aufweist.

Nach der US-A-2003/01 59 299 werden mittels Linsenanordnungen sich schneidende Linien auf einer Fläche abgebildet.

Eine Vorrichtung der eingangs genannten Art ist der US-A-3 984 154 zu entnehmen. Um einen Lichtstrahl aufzufächem, ist eine Linse vorgesehen, die die Form eines Hohlzylinder-abschnitts aufweist, auf dessen eine Kantenfläche ein kollimierter Laserstrahl auftrifft. Damit das Licht in hinreichendem Umfang nach außen reflektiert wird, weist die Innenfläche der Linse eine reflektierende Schicht auf.

Zur Erzeugung linienförmiger Markierungen wird nach der JP-A-240 94 123 eine Stablinse benutzt, deren Außenfläche abschnittsweise eine reflektierende Schicht aufweist, so dass auf diese auftreffendes Licht unmittelbar reflektiert wird. In den Bereichen, in denen eine entsprechende Reflektionsschicht nicht vorgesehen ist, kann Licht die Linse durchsetzen.

Der vorliegenden Erfindung liegt die Aufgabe zugrunde, eine Vorrichtung der eingangs genannten Art so weiterzubilden, dass mit konstruktiv einfachen Maßnahmen ein Bereich optisch ausgeleuchtet werden kann, also Linien abbildbar sind, der durch einen direkten Strahlengang der Lichtquelle nicht erfassbar ist.

Zur Lösung der Aufgabe sieht die Erfindung im Wesentlichen vor, dass die Linse einen zur Lichtquelle gewandten ersten Abschnitt aufweist, auf dessen Außenfläche das von der Lichtquelle emittierte und über eine Optik linienförmig fokussierte Licht auftrifft, dass die Außenfläche des ersten Abschnitts Licht in Richtung der Lichtquelle bis in einen Bereich reflektiert, der sich in Abhängigkeit vom Verlauf der Längsachse der Linse unterhalb, seitlich oder oberhalb der Lichtquelle und in Bezug auf die Lichtquelle bis in einen von der Lichtquelle abgewandten Bereich des Raums erstreckt, und dass das den ersten Abschnitt durchsetzende Licht auf den von der Lichtquelle abgewandten zweiten Abschnitt der Linse auftrifft , welches es zur Erzeugung einer linienförmigen optischen Markierung in einen zu der Lichtquelle fern liegenden Bereich des Raums bricht.

Erfindungsgemäß wird der durch die Abstrahlcharakteristik der Lichtquelle in etwa linienförmige Lichtstrahl über die Linse derart aufgefächert, dass eine Reflexion des Lichtes bis hinter der Lichtquelle erfolgt, so dass insbesondere auch der Bereich der Standfläche, von der die Vorrichtung ausgeht, in einem Bereich optisch markierbar ist, der mittels eines unmittelbar von der Lichtquelle ausgehenden Lichtstrahl nicht erfassbar ist, also zum Beispiel bei der Standfläche derjenige Bereich, der in vertikaler Projektion der Lichtquelle in Richtung auf die Standfläche verläuft. Entsprechende Abbildungen können auch seitlich und oberhalb der Lichtquelle erzeugt werden.

Zur Realisierung wird eine geometrisch einfache und kostengünstig herstellbare Linse verwendet, nämlich im einfachsten Fall ein rinnenförmiger Längsabschnitt eines eine Hohlzylindergeometrie aufweisenden Glaskörpers, der einerseits in Abhängigkeit von der Ausrichtung der Linse zur Lichtquelle Licht in den Bereich unterhalb, seitlich oder oberhalb der Lichtquelle reflektiert und andererseits Licht in einem Umfang durchlässt, dass in gewohnter Weise vor der Lichtquelle eine gewünschte Linie abbildbar und somit zu Messzwecken insbesondere im Baubereich nutzbar ist.

Insbesondere ist vorgesehen, dass der im Schnitt einem Bogen folgende erste Abschnitt oder Schenkel und der ebenfalls im Schnitt einem Bogen folgende zweite Abschnitt oder Schenkel jeweils zu einer Seite einer senkrecht zur optischen Achse der Lichtquelle sich erstreckenden Ebene verlaufen und dass der zur Lichtquelle gewandte erste Abschnitt vorzugsweise länger als der zweite Abschnitt ist. Durch die diesbezüglichen konstruktiven Maßnahmen erfolgt im erforderlichen Umfang ein Reflektieren und Brechen des Lichts mit der gewünschten Intensität.

Um im hinreichenden Umfang die Projektion bzw. Abbildung des linienförmigen Lichtstrahls zu erreichen, ist vorgesehen, dass der rinnenförmige Längsabschnitt ein Abschnitt eines im Schnitt eine Kreis- oder Ellipsengeometrie aufweisenden Rohres ist. Auch kann der rinnenförmige Abschnitt einen Querschnitt aufweisen, der einem Abschnitt einer Parabel entspricht.

Losgelöst hiervon ist insbesondere vorgesehen, dass sich zumindest der zur Lichtquelle gewandte erste Abschnitt aus zwei Abschnitten mit voneinander abweichenden Krümmungsradien zusammensetzt. Vorzugsweise setzt sich sowohl der erste Abschnitt als auch der zweite Abschnitt jeweils aus Abschnitten unterschiedlicher Krümmungsradien zusammen.

Um eine durch sich schneidende Linien erzeugte Markierung abzubilden, ist vorgesehen, dass im Gehäuse zumindest zwei Lichtquellen mit diesen nach geschalteten Linsen angeordnet sind, deren Längsachsen in einer gemeinsamen Ebene oder in parallel zueinander verlaufenden Ebenen und vorzugsweise rechtwinklig zueinander sich erstrecken. Hierdurch ist es insbesondere möglich, unmittelbar unterhalb des Gehäuses, also der Standfläche, ein Kreuz abzubilden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine erste Ausführungsform einer Vorrichtung zum Erzeugen linienförmiger optischer Markierungen,
- Fig. 2: eine zweite Ausführungsform einer Vorrichtung zum Erzeugen linienförmiger optischer Markierungen,
- Fig. 3: eine erste Ausführungsform einer Linse,
- Fig. 4: eine zweite Ausführungsform einer Linse und
- Fig. 5: eine weitere Ausführungsform einer Vorrichtung zum Erzeugen einer linienförmigen optischen Markierung.

Um insbesondere im Baubereich vertikale und horizontale Linien auf Oberflächen anzuzeigen, ist es bekannt, so genannte Laser-Markier- oder -Nivelliergeräte zu verwenden. Dabei werden üblicherweise Laserdioden benutzt, deren emittiertes Licht über eine Optik linienförmig gebündelt wird, um sodann im gewünschten Umfang Markierungslinien zu erzeugen.

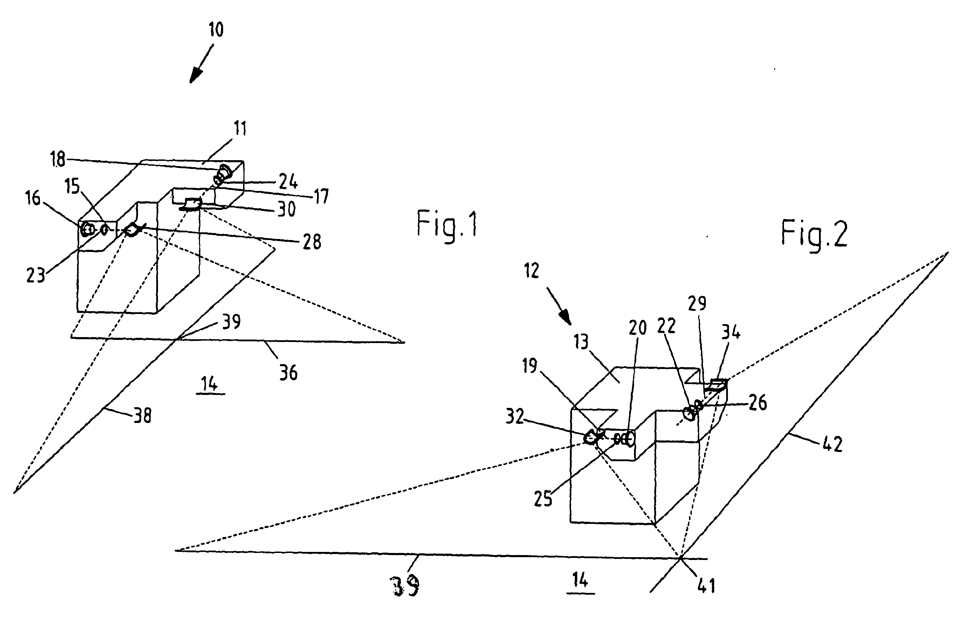

So ist den Fig. 1 und 2 rein prinzipiell ein Markierungsgerät 10 bzw. 12 zu entnehmen, das auf einer Standfläche 14 angeordnet ist. Dabei sind im Ausführungsbeispiel in jedem Gehäuse 11, 13 eines Geräts 10, 12 jeweils zwei Laserdioden 16, 18, 20, 22 angeordnet, denen in gewohnter Weise eine eine Kollimatorlinse umfassende Optik 23, 24, 25, 26 zugeordnet ist. Hierdurch wird das von der Laserdiode 16, 18, 20, 22 kommende Licht linienförmig fokussiert, um sodann auf weitere Linsen 28, 30, 32, 34 zu treffen, mittels derer der Strahl derart aufgefächert wird, dass in gewünschtem Umfang optische Linien 36, 38, 40, 42 auf der Stand- oder Bodenfläche 14 abgebildet werden. Ebenfalls können die Optik 23, 24, 25, 26 bzw. die Linsen 28, 30, 32, 34 derart ausgebildet sein, dass nicht nur optische Linien auf der Bodenfläche 14, sondern auch auf den angrenzenden Wandungen eines Raums abgebildet werden.

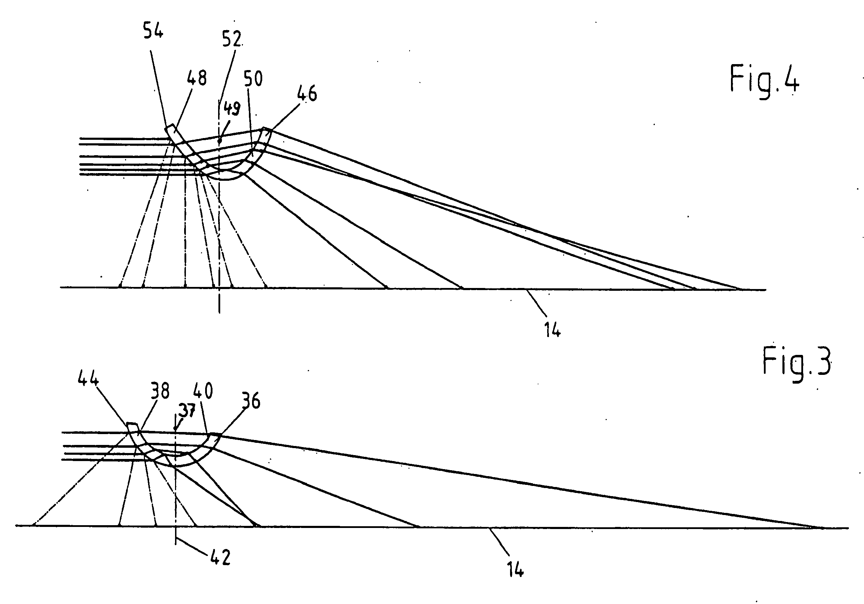

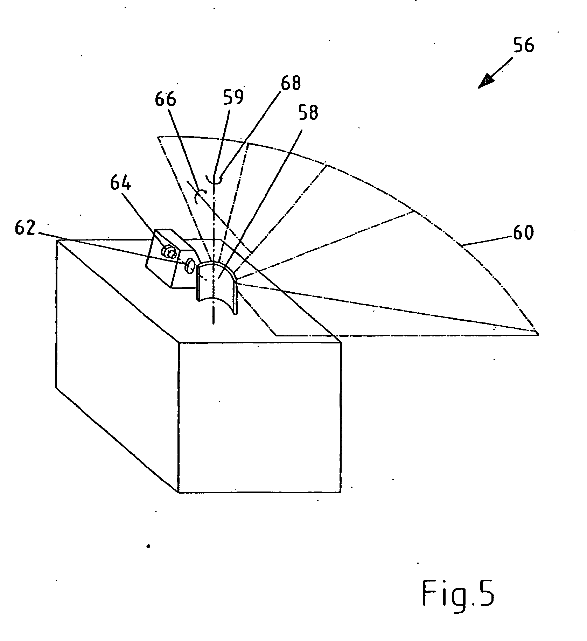

Um auch unmittelbar unterhalb der Optik 23, 24, 25, 26 bzw. der Laserdioden 16, 18, 20, 22 Markierungen, also in einem Bereich abzubilden, der von der vertikalen Projektion der Laserdioden 16, 18, 20, 22 geschnitten wird, weisen die Linsen 28, 30, 32, 34 eine rinnenförmige Geometrie mit entlang und vorzugsweise parallel zur Standfläche 14 verlaufenden Längsachsen auf, die das von der Optik 23, 24, 25 kommende Licht sowohl reflektieren als auch brechen und somit in üblicher Weise abbilden. Dieses Prinzip wird anhand der Fig. 3 und 4 näher erläutert werden.

So ist im Ausführungsbeispiel der Fig. 3 im Schnitt eine Linse 36 dargestellt, die eine Geometrie einer Rinne als Längsabschnitt eines Hohlzylinders aufweist und transparent ist. Die Längsachse 37 der Linse 36 verläuft senkrecht zur Zeichenebene. Dabei setzt sich die Linse 36 aus einem lichtquellenseitigen ersten Abschnitt 38 oder Schenkel und einem lichtquellenabgewandten zweiten Abschnitt 40 oder Schenkel zusammen, wobei der erste Abschnitt 38 länger als der zweite Abschnitt 40 ist, und zwar betrachtet entlang einer Ebene 42, die senkrecht zur Stand- oder Basisfläche 14 verläuft. Der erste und zweite Abschnitt 38, 40 weisen im Schnitt die Geometrie eines Kreisabschnitts auf.

Ein Teil der auf die Linse 36 auftreffenden Strahlen wird an der der Lichtquelle zugewandten Außenfläche 44 des ersten Abschnitts 38 reflektiert in einem Umfang, dass sich ein linienförmiger Lichtstrahl in einem Bereich erstreckt, der unterhalb der Laserdioden 16, 18, 20, 22 bzw. der unmittelbar dieser nachgeordneten die Kollimatorlinse umfassenden Optik 23, 24, 25 verläuft. Der den ersten Abschnitt 38 durchsetzende Lichtstrahlanteil wird sodann in gewohnter Weise von dem zweiten Abschnitt 40 gebrochen, um vor der Linse 36, also in dem zu der Laserdiode 16, 18, 20, 22 fern liegenden Bereich eine linienförmige optische Markierung auf der Stand- oder Basisfläche 14 abzubilden, wie dies durch die in der Fig. 3 dargestellten Lichtstrahlen symbolisiert wird.

Eine der Fig. 4 zu entnehmende ebenfalls eine rinnenförmige Geometrie aufweisende Linse 46 weist gleichfalls einen lichtquellenseitig verlaufenden ersten Abschnitt 48 und einen lichtquellenseitig fern liegenden zweiten Abschnitt 50 auf, um optisch die Funktionen auszuüben, die anhand der Linse 36 erläutert worden sind. Abweichend von dem Ausführungsbeispiel der Fig. 3 weist die Linse 46 jedoch nicht die Geometrie eines Hohlzylinderlängsabschnitts auf, sondern im Schnitt die Geometrie eines Ellipsen- oder Parabelabschnitts auf. Dabei ist der erste Abschnitt 48 ebenfalls länger als der zweite Abschnitt 50 betrachtet zu einer senkrecht zu der Stand- oder Basisfläche 14 verlaufenden Ebene 52. Die Längsachse 49 der Linse 46 durchsetzt die Zeichenebene.

Um unmittelbar unterhalb der Lichtquelle.bzw. der dieser unmittelbar nachgeordneten Optik eine Linie optisch abbilden zu können, wird ein Teil der von der Lichtquelle stammenden Strahlung reflektiert, und zwar an der lichtquellenzugewandten Außenfläche 54 des ersten Abschnitts 48. Verbleibender Anteil der Strahlung wird gebrochen, um im gewünschten Umfang vor der Optik auf der Standfläche 14 eine Linie abzubilden.

Der erste und zweite Abschnitt 38, 40 bzw. 48, 50 kann jeweils aus Abschnitten unterschiedlicher Krümmungsradien zusammengesetzt sein, bzw. der erste Abschnitt als Einheit kann insgesamt einen ersten Krümmungsradius und der zweite Abschnitt einen zweiten Krümmungsradius aufweisen, wobei die Krümmungsradien ihrerseits unterschiedlich sind.

Sind die Linsen 36, 46 vorzugsweise transparent ausgebildet, so kann auch im gewünschten Umfang eine Teiltransparenz gegeben sein, um die Intensitäten des auf der Standfläche 14 abgebildeten Strahls in gewünschtem Umfang einstellen zu können.

Des Weiteren ist den Fig. 1 und 2 zu entnehmen, dass die in dem Gehäuse 1 bzw. 13 angeordneten Lichtquellen 16, 18, 20, 22, d.h., deren optischen Achsen 15, 17 bzw. 19, 29 derart zueinander ausgerichtet sind, dass sich die von den vorgeschalteten die rinnenförmige Geometrie aufweisenden Linsen 28, 30, 32, 34 auf der Standfläche 14 abgebildeten Linien 36, 38, 39, 42 in einem Punkt 39, 41 schneiden, und zwar vorzugsweise unter einem rechten Winkel.

Der Fig. 5 ist eine weitere Ausführungsform eines Markierungsgerätes 56 zu entnehmen, mittels dessen eine linienförmige optische Markierung auf ein Objekt wie Wand eines Raumes projizierbar ist. Abweichend von den Ausführungsformen der Fig. 1 und 2 verläuft Längsachse 59 einer ebenfalls eine rinnenförmige Geometrie aufweisenden Linse 58 vertikal, so dass infolgedessen senkrecht hierzu, also horizontal eine entsprechende Markierung 60 abbildbar ist. Hierzu ist es selbstverständlich erforderlich, dass auf die Linse 58 ein entsprechender Lichtstrahl 62, der von einer Laserdiode 64 emittiert wird, auf die Linse 58 auftrifft, um entsprechend der Erläuterungen zu den Fig. 1 bis 4 die Markierung 60 zu erzeugen, die sich sowohl vor als auch seitlich hinter der Laserdiode 64 erstreckt.

Aus den Erläuterungen der Fig. 5 bzw. aus einem Vergleich mit den Ausführungsbeispielen der Fig. 1 bis 4 ergibt sich, dass in Abhängigkeit von der Ausrichtung der Längsachse 59 der Linse 58 die linienförmige optische Markierung 60 auf ein Objekt ausgerichtet werden kann.

Um unterschiedliche Projektionsrichtungen zu ermöglichen, kann die Linse 58 um eine senkrecht zur Längsachse 59 der Linse 58 verlaufende Achse drehbar ausgebildet sein (Pfeil 66). Auch besteht die Möglichkeit, die Linse 58 um die Längsachse 59 zu drehen (Pfeil 68), um die Erstreckung der optischen Markierung verstellen zu können.

## Patentansprüche

1. Vorrichtung zum Abbilden einer linienförmigen optischen Markierung (36, 38, 39 42, 60) in einen Raum umfassend ein Gehäuse (11, 13) mit einer Licht entlang einer optischen Achse (15, 17, 19, 29) emittierenden Lichtquelle (16, 18, 20, 22, 64) sowie eine der Lichtquelle nach geschaltete von der optischen Achse durchsetzte das Licht sowohl reflektierende als auch durchlassende eine rinnenförmige Geometrie aufweisende Linse (28, 30, 32, 34, 36, 38, 46, 58), deren Längsachse (37, 49) quer zur optischen Achse der Lichtquelle verläuft,
**dadurch gekennzeichnet,**
**dass** die Linse (28, 30, 32, 34, 36, 46, 58) einen zur Lichtquell (16,18,20,22,64) gewandten ersten Abschnitt (38, 40) aufweist, auf dessen Außenfläche das von der Lichtquelle (16, 18, 20, 22, 64) emittierte und über eine Optik linienförmig fokussierte Licht auftrifft, dass die Außenfläche des ersten Abschnitts Licht in Richtung der Lichtquelle bis in einen Bereich reflektiert, der sich in Abhängigkeit vom Verlauf der Längsachse der Linse unterhalb, seitlich oder oberhalb der Lichtquelle und in Bezug auf die Lichtquelle bis in einen von der Lichtquelle (16,18,20,22,64) abgewandten Bereich des Raums erstreckt, und dass das den ersten Abschnitt durchsetzende Licht auf den von der Lichtquelle (16,18,20,22,64) abgewandten zweiten Abschnitt (40, 50) der Linse auftrifft, welches es zur Erzeugung einer linienförmigen optischen Markierung in einen zu der Lichtquelle fern liegenden Bereich des Raums bricht

2. Vorrichtung nach Anspruch 1, wobei dem Gehäuse (11, 13) eine Basisfläche (14) wie Bodenfläche des Raums zugeordnet ist,
**dadurch gekennzeichnet,**
**dass** sich die Längsachse (34, 39, 59) der Linse (28, 30, 32, 34, 36, 46) entlang der Basisfläche (14) erstreckt und dass über die zur Lichtquelle (16, 18, 20, 22, 64) gewandte Außenfläche (44, 54) des ersten Abschnitts (38, 48) Licht auf die Basisfläche in einen Bereich reflektiert ist, der in Bezug auf die Basisfläche mit einem unmittelbar unterhalb der Lichtquelle sich erstreckenden Bereich zusammenfällt.

3. Vorrichtung nach Anspruch 1 oder 2,
**dadurch gekennzeichnet,**
**dass** die Linse (28, 30, 32, 34, 46, 58) sich aus dem zur Lichtquelle (16, 18, 20, 22, 64) gewandten ersten Abschnitt (38, 48) und einem von der Lichtquelle (16, 18, 20, 22, 64) abgewandten zweiten Abschnitt (40, 50) zusammensetzt und dass der erste und der zweite Abschnitt jeweils zu einer Seite einer senkrecht zur optischen Achse (15, 17, 19, 21, 59) der Lichtquelle (16, 18, 20, 22) sich erstreckenden Ebene (42, 52) verlaufen und vorzugsweise unterschiedlich lang sind.

4. Vorrichtung nach zumindest Anspruch 3,
**dadurch gekennzeichnet,**
**dass** der erste Abschnitt (38, 48) der Linse (36, 46) länger als der zweite Abschnitt (40, 50) ist, betrachtet in einer Ebene die renkrecht zur Basisfläche (14) und parallel zur optischen Achse der Lichtquelle verläuft.

5. Vorrichtung nach zumindest Anspruch 1,
**dadurch gekennzeichnet,**
**dass** die eine rinnenförmige Geometrie aufweisende Linse (28, 30, 32, 34, 36, 46, 58) ein Längsabschnitt eines im Schnitt eine Kreis- oder Ellipsengeometrie aufweisenden Rohres ist.

6. Vorrichtung nach zumindest Anspruch 1,
**dadurch gekennzeichnet,**
**dass** die die rinnenförmige Geometrie aufweisende Linse (46, 58) einen Querschnitt aufweist, der einem Abschnitt einer Parabel entspricht.

7. Vorrichtung nach zumindest Anspruch 1,
**dadurch gekennzeichnet,**
**dass** sich zumindest der Zur Lichtquelle gewandte erste Abschnitt (38, 48) der Linse (36, 46, 56) aus Abschnitten mit voneinander abweichenden Krümmungsradien zusammensetzt.

8. Vorrichtung nach zumindest Anspruch 1,
**dadurch gekennzeichnet,**
**dass** sich sowohl der erste Abschnitt (38, 48) als auch der zweite Abschnitt (40, 50) der Linse (36, 46, 56) aus Abschnitten mit voneinander abweichenden Krümmungsradien zusammensetzt.

9. Vorrichtung nach zumindest Anspruch 1,
**dadurch gekennzeichnet,**
**dass** der erste Abschnitt (38) einen ersten Krümmungsradius und der zweite Abschnitt (40) der Linse (36) einen zweiten Krümmungsradius aufweist und dass der erste Krümmungsradius von dem zweiten Krümmungsradius abweicht.

10. Vorrichtung nach zumindest Anspruch 1,
**dadurch gekennzeichnet,**
**dass** die Linse Bereiche mit voneinander abweichenden Wandstärken aufweist.

11. Vorrichtung nach zumindest Anspruch 1,
**dadurch gekennzeichnet,**
**dass** in dem Gehäuse (11, 13) mehrere Lichtquellen (16, 18, 20, 22) mit diesen nach-geschalteten Linsen (28, 30, 32, 34) derart angeordnet sind, dass die Längsachsen (37, 49) der Linsen in einer gemeinsamen Ebene oder in parallel zueinander verlaufenden Ebenen und rechtwinklig zueinander verlaufen und sich die von den Linsen erzeugten linienförmigen optischen Markierungen (36, 38, 39, 42) unter einem rechten Winkel schneiden.

## Claims

1. Device for depicting a linear optical marking (36, 38, 39, 42, 60) in a room, comprising a housing (11, 13) with a light source (16, 18, 20, 22, 64) emitting light along an optical axis (15, 17, 19, 29) as well as a lens (28, 30, 32, 34, 36, 38, 46, 58) having a trough-shaped geometry that both reflects the light and allows it to pass, that is arranged after the light source and through which the optical axis extends, said lens having a longitudinal axis (37, 39) running transversely to the optical axis of the light source,
**characterized in**
**that** the lens (28, 30, 32, 34, 36, 38, 46, 58) has a first section (38, 40) turned toward the light source (16, 18, 20, 22, 64), on the outer surface of which impinges the light being emitted by the light source (16, 18, 20, 22, 64) and linearly focused via an optic, that the outer surface of the first section reflects light in the direction of the light source all the way into an area that extends beneath, to the side of or above the light source as a function of the course of the longitudinal axis to the lens and, in term of the light source, into an area of the room that is turned away from the light source (16, 18, 20, 22, 64), and that the light passing through the first section impinges on the second section (40, 50) of the lens that is turned away from the light source (16, 18, 20, 22, 64), said second section refracting the light for generating a linear optical marking in the area of the room distal to the light source.

2. Device according to claim 1, wherein the housing (11, 13) is assigned a base surface (14) such as the floor surface of the room,
**characterized in**
**that** the longitudinal axis (34, 39, 59) of the lens (28, 30, 32, 34, 36, 46) extends along the base (14) and via the outer surface (44, 54), turned toward the light source (16, 18, 20, 22, 64), of the first section (38, 48) and that light is reflected onto the base surface in an area that, in relation to the base surface, coincides with an area extending directly beneath the light source.

3. Device according to claim 1 or 2,
**characterized in**
**that** the lens (28, 30, 32, 34, 46, 58) is composed of a first section (38, 48) turned towards the light source (16, 18, 20, 22, 64) and a second section (40, 50) turned away from the light source (16, 18, 20, 22, 64), and that the first and second sections each run to one side of a plane (42, 52) that extends perpendicular to the optical axis (15, 17, 19, 21, 59) of the light source (16, 18, 20, 22) and preferably have different lengths.

4. Device according to at least claim 3,
**characterized in**
**that** the first section (38, 48) of the lens (36, 46) is longer than the second section (40, 50), viewed in a plane that runs perpendicular to the base surface (14) and parallel to the optical axis of the light source.

5. Device according to at least claim 1,
**characterized in**
**that** the lens (28, 30, 32, 34, 36, 46, 58) having a trough-shaped geometry is a longitudinal section of a tube having a circular or elliptic geometry in its cross-section.

6. Device according to at least claim 1,
**characterized in**
**that** the lens (46, 58) having a trough-shaped geometry has a cross-section that corresponds to a section of a parabola.

7. Device according to at least claim 1,
**characterized in**
**that** at least the first section (38, 48), turned toward the light source, of the lens (36, 46, 56) is composed of sections with bending radii that deviate from each other.

8. Device according to at least claim 1,
**characterized in**
**that** both the first section (38, 48) and the second section (40, 50) of the lens (36, 46, 56) are composed of sections with bending radii that deviate from each other.

9. Device according to at least claim 1,
**characterized in**
**that** the first section (38) has a first bending radius and the second section (40) of the lens (36) has a second bending radius, and that the first bending radius deviates from the second bending radius.

10. Device according to at least claim 1,
**characterized in**
**that** the lens comprises areas with different wall thicknesses.

11. Device according to at least claim 1,
**characterized in**
**that** several light sources (16, 18, 20, 22) with lenses (28, 30, 32, 34) downstream to them are arranged in the housing (11, 13) such that the longitudinal axes (37, 49) of the lenses run in a common plane or in planes running parallel to each other and at a right angle to each other and that the linear optical markings (36, 38, 40, 42) generated by the lenses intersect at a right angle.

## Revendications

1. Dispositif de projection d'un repérage optique linéaire (36, 38, 39, 42, 60) dans une chambre comprenant un boîtier (11, 13) avec une source lumineuse (16, 18, 20, 22, 64) émettant une lumière le long d'un axe optique (15, 17, 19, 29) ainsi qu'une lentille (28, 30, 32, 34, 36, 38, 46, 58) raccordée en aval de la source lumineuse et réfléchissant mais aussi faisant passer la lumière traversée par l'axe optique et présentant une géométrie en forme de rigole, l'axe longitudinal (37, 49) de cette lentille s'étendant transversalement à l'axe optique de la source lumineuse,
**caractérisé en ce que**
la lentille (28, 30, 32, 34, 36, 46, 58) présente une première partie (38, 40) tournée vers la source lumineuse (16, 18, 20, 22, 64) dont la surface extérieure reçoit en incidence la lumière émise par la source lumineuse (16, 18, 20, 22, 64) et focalisée de manière linéaire sur une optique,
la surface extérieure de la première partie réfléchit la lumière en direction de la source lumineuse jusque dans une zone qui s'étend, en fonction du tracé de l'axe longitudinal de la lentille, en dessous, à côté ou au-dessus de la source lumineuse et, par rapport à la source lumineuse, jusque dans une zone de la chambre opposée à la source lumineuse (16, 18, 20, 22, 64), et
la lumière traversant la première partie arrive sur la deuxième partie (40, 50) de la lentille opposée à la source lumineuse (16, 18, 20, 22, 64) et se disperse pour produire un repérage optique linéaire dans une zone de la chambre éloignée de la source lumineuse.

2. Dispositif selon la revendication 1,
dans lequel une surface de base (14) telle que la surface au sol de la pièce est associée au boîtier (11, 13),
**caractérisé en ce que**
l'axe longitudinal (34, 39, 59) de la lentille (28, 30, 32, 34, 36, 46) s'étend le long de la surface de base (14) et,
sur la surface extérieure (44, 54) de la première partie (38, 48) tournée vers la source lumineuse (16, 18, 20, 22, 64), la lumière est réfléchie sur la surface de base dans une zone coïncidant avec une zone s'étendant directement en dessous de la source lumineuse par rapport à la surface de base.

3. Dispositif selon la revendication 1 ou 2,
**caractérisé en ce que**
la lentille (28, 30, 32, 34, 46, 58) se compose de la première partie (38, 48) tournée vers la source lumineuse (16, 18, 20, 22, 64) et d'une deuxième partie (40, 50) opposée à la source lumineuse (16, 18, 20, 22, 64), et
la première et la deuxième partie s'étendent respectivement vers un côté d'un plan (42, 52) perpendiculaire à l'axe optique (15, 17, 19, 21, 59) de la source lumineuse (16, 18, 20, 22) et sont de préférence de longueurs différentes.

4. Dispositif selon au moins la revendication 3,
**caractérisé en ce que**
la première partie (38, 48) de la lentille (36, 46) est plus longue que la deuxième partie (40, 50), considérée dans un plan perpendiculaire à la surface de base (14) et parallèle à l'axe optique de la source lumineuse.

5. Dispositif selon au moins la revendication 1,
**caractérisé en ce que**
la lentille (28, 30, 32, 34, 36, 46, 58) présentant une géométrie en forme de rigole est une partie longitudinale d'un tube présentant en coupe une géométrie en forme de cercle ou d'ellipse.

6. Dispositif selon au moins la revendication 1,
**caractérisé en ce que**
la lentille (46, 58) présentant la géométrie en forme de rigole présente une coupe transversale correspondant à une partie d'une parabole.

7. Dispositif selon au moins la revendication 1,
**caractérisé en ce que**
la première partie (38, 48) de la lentille (36, 46, 56) tournée vers la source lumineuse se compose au moins de parties ayant des rayons de courbure divergents les unes des autres.

8. Dispositif selon au moins la revendication 1,
**caractérisé en ce que**
la première partie (38, 48) tout comme la deuxième partie (40, 50) de la lentille (36, 46, 56) se composent de parties ayant des rayons de courbure divergents les unes des autres.

9. Dispositif selon au moins la revendication 1,
**caractérisé en ce que**
la première partie (38) présente un premier rayon de courbure et la deuxième partie (40) de la lentille (36) présente un deuxième rayon de courbure, et
le premier rayon de courbure diverge du deuxième rayon de courbure.

10. Dispositif selon au moins la revendication 1,
**caractérisé en ce que**
la lentille présente des zones ayant des épaisseurs de paroi divergentes les unes des autres.

11. Dispositif selon au moins la revendication 1,
**caractérisé en ce que**
dans le boîtier (11, 13), plusieurs sources lumineuses (16, 18, 20, 22) sont disposées avec ces lentilles (28, 30, 32, 34) raccordées en aval de sorte que les axes longitudinaux (37, 49) des lentilles s'étendent dans un même plan ou dans des plans parallèles l'un par rapport à l'autre et à angles droits l'un par rapport à l'autre, et les repérages optiques linéaires (36, 38, 39, 42) produits par les lentilles se coupent à angle droit.
